# EUROPEAN PATENT SPECIFICATION

(11) **EP 3 812 112 B1**
(45) Date of publication and mention of the grant of the patent: **04.01.2023**
(21) Application number: 20397511.5
(22) Date of filing: 18.09.2020
(51) Int. Cl.: B27B 17/08, A01G 23/091, F15B 11/20, B23Q 11/04, B23Q 15/12, B23Q 5/26

(54) **HYDRAULIC SYSTEM FOR CONTROLLING A SAWING APPARATUS**
HYDRAULIKSYSTEM ZUR STEUERUNG EINER SÄGEVORRICHTUNG
SYSTÈME HYDRAULIQUE POUR COMMANDER UN APPAREIL DE SCIAGE

(30) Priority: 24.10.2019 FI 20195915
(43) Date of publication of application: 28.04.2021
(73) Proprietor: Waratah OM Oy, 80101 Joensuu (FI)
(72) Inventor: Alfthan, Arto, 37770 Sääksmäki (FI); Jormanainen, Toni, 80400 Ylämylly (FI)
(74) Representative: Berggren Oy

(56) References cited:
- WO-A1-2004/083653
- US-A- 4 083 291
- US-A- 4 368 763
- US-A1- 2004 020 561

## Description

### Technical Field

The presented solution relates to a hydraulic system for controlling a sawing apparatus adapted to cross-cut tree stems.

The presented solution further relates to a sawing apparatus for cross-cutting tree stems and comprising a swingable saw blade around which a saw chain is adapted to travel, and a hydraulic circuit.

The presented solution further relates to a tree stem processing tool including a sawing apparatus for cross-cutting tree stems.

The presented solution further relates a mobile work machine.

### Background

Mobile work machines, forestry equipment and forestry machines, e.g. harvesters and forwarders, have an articulated boom and a tree stem processing tool at the tip of the boom. The tool can be e.g. a harvester head, a felling head, or a harvesting and processing head. The tool can be applied e.g. to cut standing trees, to process felled trees or to grab objects, such as logs or tree stems, and it is operated under the control of an operator of the work machine.

The tool may have a sawing apparatus for cross cutting a standing tree and/or a tree stem held in the tool. The sawing apparatus is e.g. a chain saw provided with a saw blade around which a saw chain travels when driven by an actuator, e.g. a hydraulic motor. The actuator is adapted to convert hydraulic pressure and fluid flow into torque and rotational speed for driving the saw chain. The sawing apparatus includes an actuator, e.g. a hydraulic cylinder, for swinging the saw blade for performing the cross-cutting. The actuator is adapted to convert hydraulic pressure and flow into force and speed of the saw blade.

In a hydraulic system controlling the actuators, the saw chain on the saw blade is pressed against a tree stem with a force to crosscut the tree stem by means of the saw chain that is moving with a velocity. However, depending on the properties of the tree stem, the load on the motor and the saw chain pressing against the tree stem may increase and bring about a decrease in the velocity of the saw chain. The increase in the load implies an increased fluid pressure in a part of the hydraulic system and results in a decrease in the fluid flow.

The load on the saw chain decreases rapidly or disappears completely when the saw chain penetrates through the tree stem and the crosscutting is fully performed. However, immediately after this, the increased fluid pressure and hydraulic energy accumulated in the hydraulic system bring about a rapid, unwanted increase in the velocity of the saw chain, which may be risky. A remedy is to have a pressure compensating flow control valve arrangement to keep the fluid flow supplied to the motor constant even if the load on the saw chain and the fluid pressure increases.

Operation of the valve arrangement is not optimal in a situation in which the operation involves delays, or the valve arrangement is saturated, i.e. in a state allowing a maximum fluid flow to pass via the valve arrangement to the motor to increase the velocity. An unwanted sudden increase in the velocity of the saw chain takes place when the crosscutting is fully performed even if the valve arrangement starts to restrict the fluid flow.

A remedy is to control the fluid flow supplied to the hydraulic cylinder that is pressing the saw blade and the saw chain against the tree stem. Such a solution is presented in WO 2004/083653 A1. Another known solution for controlling the sawing apparatus is disclosed in US 2004/0020561 A1 according to the preamble of the enclosed claim 1.

### Summary

The solution to be presented relates to overcoming one or more of the disadvantages noted above.

The hydraulic system according to the invention is defined by the features of claim 1.

The sawing apparatus according to the invention is defined by the features of claim 13. The tree stem processing tool according to the invention is defined by the features of claim 14. The mobile work machine according to invention is defined by the features of claim 15.

According to the invention, the force with which the hydraulic cylinder presses the saw chain against the tree stem is controllably decreased to avoid the increase in the load on the saw chain and the unwanted decrease in the velocity of the saw chain. The unwanted sudden increase in the velocity of the saw chain immediately after crosscutting is avoided, or the velocity increases to an acceptable level only.

### Brief Description of the Drawings

Figure 1 shows an exemplary mobile working machine according to the invention.
Figure 2 shows an exemplary tree stem processing tool according to the invention.
Figure 3 shows an exemplary embodiment of the hydraulic system according to the invention.
Figure 4 shows another exemplary embodiment of the hydraulic system according to the invention.
Figure 5 shows yet another exemplary embodiment of the hydraulic system according to the invention.

### Description of example embodiments

Reference will now be made to the examples which are illustrated in the accompanying drawings. Wherever possible, the same or corresponding reference numbers will be used throughout the drawings to refer to the same or corresponding parts or features.

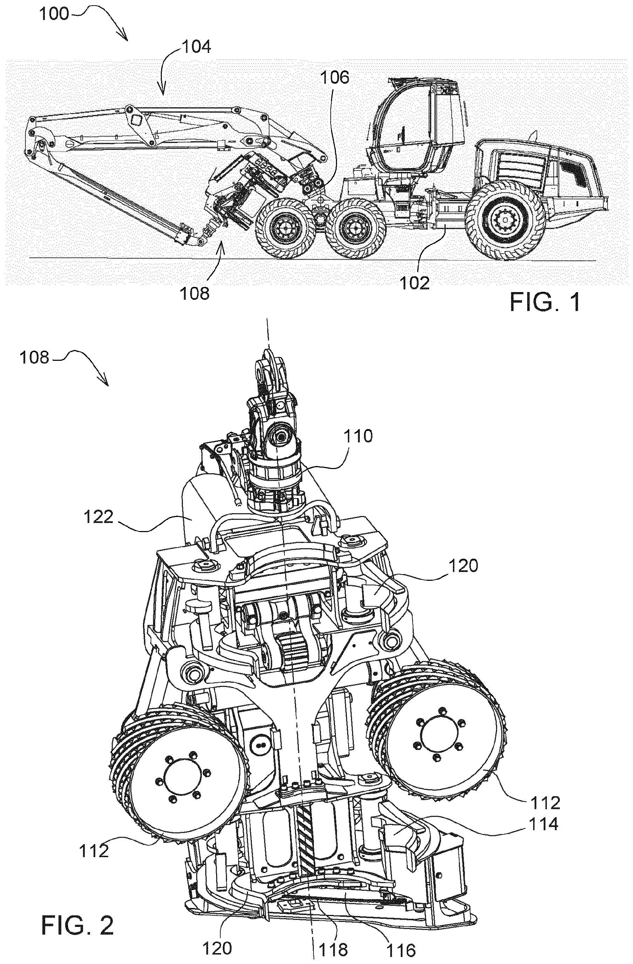

Fig. 1 shows an exemplary mobile work machine 100 in which the presented solution can be applied. The mobile work machine may be a forestry machine, for example a harvester for harvesting and processing timber or tree stems, as shown in Fig. 1, or a forwarder for transferring timber or tree stems. The mobile work machine 100 may be an excavator-based machine.

The mobile work machine 100 (also referred to herein as a machine, a mobile working machine, and a vehicle) comprises a frame 102 and an articulated boom 104 (also referred to herein as a boom) on the frame 102. The machine 100 may further comprise a cabin 104 with an operator's station on the frame 102.

The frame 102 may be articulated and have two or more frame sections connected one after the other by means of a controlled joint. The frame 102 may be wheeled and supported by several wheels. Alternatively, the frame 102 may have an endless track arrangement, i.e. a caterpillar track, for supporting the frame 102 and for driving the machine 100.

The boom 104 may be mounted on the frame 102 or a slewing apparatus 106 connected to the frame 102 for changing the orientation of the boom 104, or the frame 102 rotates in relation to the endless track arrangement. The boom 104 can be rotated about a rotation axis that is substantially vertical. The boom 104 may have two or more boom sections connected one after the other by means of joint arrangements controlled by means of one or several actuators, e.g. hydraulic cylinders.

Fig. 2 shows an exemplary tree stem processing tool 108 (also referred to herein as a tool) that may be connected to the boom 104. Preferably, the tool 108 is connected to the end of the boom 104.

The tool 108 may be rotatably connected to the boom 108 by means of an actuator 110, e.g. a rotary actuator or a rotator. By means of the actuator 110, the tool 104 suspended from the actuator 110 can be controllably rotated about a rotation axis that is oriented substantially vertically.

The tool 108 may be a harvester head, a felling head, a harvesting and processing head, or a harvester head suitable for use as a log grapple. According to the example of Fig. 1, the tool 108 is a harvester head for harvesting and processing timber by first grabbing and felling a standing tree and then debranching and cross cutting the tree stem.

The tool 108 may include a frame including tilting devices 122 enabling tilting of a housing of the tool 108. The tool 108 may have two or more arms 120 pivotally connected to the housing of the tool 108 for grabbing a standing tree, a log, or a tree stem e.g. from two opposite sides. The arms 120 may be additionally constructed as blades for debranching a tree stem held in the tool 108.

The tool 108 may comprise a feeding device 112 for transferring a tree stem through the tool 108 while being held in the tool 108. The tree stem is transferred in its longitudinal direction. The feeding device 112 may include one or more feed wheels that contact the tree stem and are adapted to rotate for transferring the tree stem. The tree stem is transferred for simultaneously debranching the tree stem by means of blades and/or for moving the tree stem to a position in which it is crosscut.

The tool 108 has a sawing apparatus 114 for cross cutting a standing tree and/or a tree stem held in the tool 108. The sawing apparatus 114 is e.g. a chain saw provided with a swingable saw blade 116 around which a saw chain 118 travels when driven by an actuator, e.g. a rotary actuator or a motor. The motor may be a hydraulic motor adapted to convert hydraulic pressure and flow into torque and rotational speed for driving the saw chain 118. The sawing apparatus 114 includes an actuator for swinging the saw blade 116 for performing the cross-cutting, the actuator being adapted to convert hydraulic pressure and flow into force and speed of the saw blade 116.

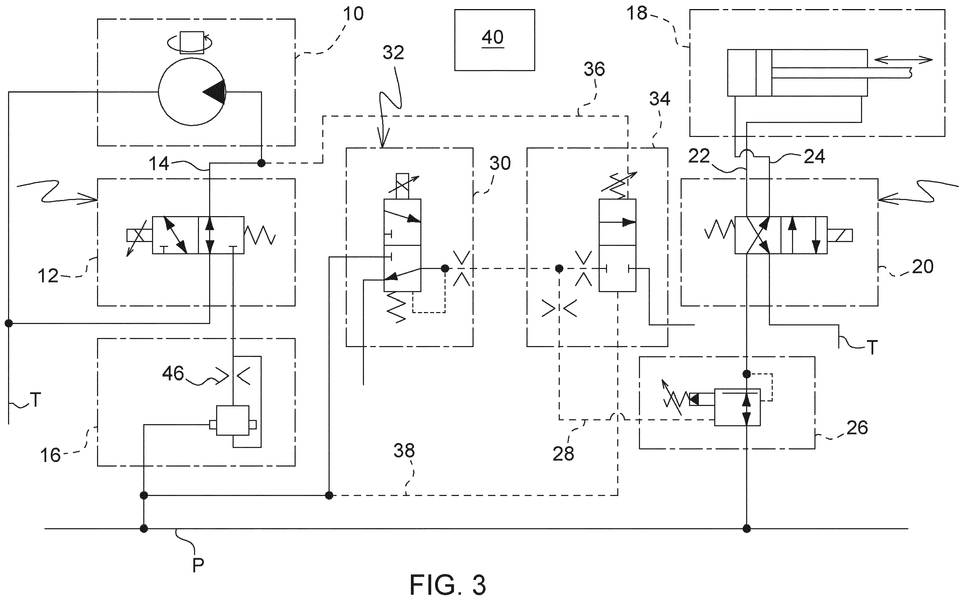

Fig. 3 shows an exemplary hydraulic system for controlling the sawing apparatus 114 that is adapted to cross-cut tree stems.

The hydraulic system according to the solution comprises a pressure line P; a tank line T; first and second actuators 10, 18; first and second electrically operated valve arrangements 12, 20; a pilot operated third valve arrangement 26; a fourth electrically operated valve arrangement 30; and control devices.

The pressure line P supplies fluid under pressure, namely at a first fluid pressure p1. The pressure line P may be in the form of a branched circuit providing flows of fluid under pressure to various parts of the hydraulic system. A tank line T is adapted to receive fluid flowing from the actuators. The pressure line P may be in fluid communication with a hydraulic pump providing the fluid under pressure. The tank line T may be branched and is adapted to provide low backpressure. The tank line T may be in fluid communication with a hydraulic reservoir to which the fluid is fed. The hydraulic system may further include drain lines that provide very low backpressure and convey fluid to the hydraulic reservoir.

The first actuator 10 is a hydraulic motor to bring about a torque for driving the saw chain 118 to move at a velocity and to crosscut a tree stem.

The first valve arrangement 12 is adapted to control a fluid flow supplied from the pressure line P to the first actuator 10. The fluid flows via a first line 14. For driving the first actuator 10, the first valve arrangement 12 includes a selectable first state which enables the flow of fluid under pressure from the pressure line P to the first line 14. The first valve arrangement 12 is electrically operated in such a way that the state can be selected with an input control signal that may provide proportional control of the fluid flow.

The velocity of the saw chain 118 is dependent on the volume flow of the fluid supplied to the first actuator 10. The velocity increases with the increasing volume flow. The volume flow via the first valve arrangement 12 depends on a pressure difference between the pressure line P and the first line 14. The volume flow decreases with the decreasing pressure difference. The fluid pressure in the pressure line P remains substantially constant during operation.

Therefore, an increasing load on the saw chain 118 may bring about an increase in the fluid pressure of the first line 14. The load on the saw chain 118 may vary according to the properties of the tree stem. The first actuator 10 provides an adequate torque for driving the saw chain 118. Thus, the pressure difference decreases and may have the unwanted consequence that the flow of fluid to the first actuator 10 decreases and the velocity of the saw chain 118 decreases.

The load on the saw chain 118 decreases rapidly or disappears completely when the saw chain 118 penetrates through the tree stem and the crosscutting is fully performed. Immediately after this, the increased fluid pressure in the first line 14 and hydraulic energy accumulated in the hydraulic system may bring about a rapid, unwanted and considerable increase in the velocity of the saw chain 118.

The first valve arrangement 12 may additionally include a selectable second state which disables the above-mentioned flow of fluid. In the second state, the first actuator 10 can be kept in a stopped state.

The first valve arrangement 12 may include one or more directional control valves that may be pilot operated or electrically operated.

The second actuator 18 is a hydraulic cylinder for driving the saw blade 116 to bring about a force pressing the saw chain 118 against the tree stem.

The second valve arrangement 20 is adapted to control a fluid flow supplied from the pressure line P to the second actuator 18. The fluid flows via a second line 22. For driving the second actuator 18 in a first direction, e.g. for extending or retracting the hydraulic cylinder, the second valve arrangement 20 includes a selectable first state which enables flow of fluid under pressure from the pressure line P to the second line 22. The first valve arrangement 20 is electrically operated in such a way that the state can be selected with an input control signal.

The second valve arrangement 20 may additionally include a selectable second state which disables the above-mentioned flow of fluid, or which enables a flow of fluid under pressure from the pressure line P to the third line 24 for retracting or extending the hydraulic cylinder. In the first and second states, the second valve arrangement 20 may convey fluid from the actuator 18 to the tank line T. Thus, the saw blade 116 is driven in an opposite, second direction away from the tree stem.

Additionally, or alternatively, the second valve arrangement 20 may be adapted to maintain backpressure in the actuator 18 for driving the saw blade 116 in the second direction when the flow of fluid is disabled.

The second valve arrangement 20 may include one or more directional control valves that may be pilot operated or electrically operated.

The third valve arrangement 26 is pilot operated by means of a pilot line 28 and is adapted to maintain a predetermined second fluid pressure p2 in the fluid flow entering the second valve arrangement 20. The second fluid pressure p2 is reduced in relation to the first fluid pressure p1 in such a way that the second fluid pressure p2 is dependent on third fluid pressure p3 of the pilot line 28 that is in fluid communication with the third valve arrangement 26. The fluid flow is adapted to enter the second valve arrangement 20 from the pressure line P via the third valve arrangement 26.

The magnitude of the force pressing the saw blade 116 and the saw chain 118 against the tree stem is dependent on the second fluid pressure p2 present in the second actuator 18. The force increases with the increasing fluid pressure.

The load on the saw chain 118 also depends on the pressing force. The load increases with the increasing pressing force. Thus, the pressing force set to a high level by means of the second fluid pressure p2 may, as described above, have the unwanted consequence that the velocity of the saw chain 118 decreases. The magnitude of the pressing force is set by controlling the second fluid pressure p2 by means of the third valve arrangement 26 which is controlled by the third fluid pressure p3 of the pilot line 28.

The third valve arrangement 26 may include a function for limiting the pressure of the fluid flow. The third valve arrangement 26 may include a pressure limiting valve and/or a pressure reducing valve that is pilot operated and/or adjustable. The third valve arrangement 26 may provide proportional control in the form of a pressure control proportional valve.

The fourth valve arrangement 30 is controlled by a first electric input control signal 32 and is adapted to be in fluid communication with the pilot line 28. The fourth valve arrangement 30 may be in fluid communication with the pressure line P for directing fluid to the pilot line 28. The fourth valve arrangement 30 is electrically operated and provides proportional control of fluid pressure. Thus, the fourth valve arrangement 30 is adapted to maintain the third fluid pressure p3 of the pilot line 28 at a predetermined maximum pressure level which depends on the magnitude of the first input control signal 32, being an electric signal.

Thus, the pressing force of the second actuator 18 is indirectly controlled by means of the pressure level of the third fluid pressure p3 of the pilot line 28 and the first input control signal 32.

The first input control signal 32 is dependent on control actions of an operator who is setting the predetermined maximum pressure level for the pilot line 28. The operator selects the third fluid pressure p3 by e.g. interacting with an electronic control unit 40 by means of a user interface. Thus, the operator sets the pressing force of saw blade 116 by means of the first input control signal 32.

The fourth valve arrangement 30 may provide proportional control or include a directional control proportional valve and/or a restriction, or an orifice, in the pilot line 28, for inducing a pressure difference and for controlling the third fluid pressure p3. The electronic control unit 40 may be included in the fourth valve arrangement 30.

The fourth valve arrangement 30 may be adapted to supply fluid from the pilot line 28 to a drain line, to maintain the third fluid pressure p3 at the predetermined maximum pressure level.

The hydraulic system according to the solution may further comprise a sixth valve arrangement 16.

The sixth valve arrangement 16 is adapted to maintain a predetermined substantially constant fluid flow while the first valve arrangement 12 is in the first state. The operation is carried out in such a way that the fluid flow is independent of the fluid pressure of the first line 14 and thereby any fluid pressure changes occurring in the first line 14 are compensated for. Fluid flow received by the first actuator 10 and arriving from the first line 14 is kept substantially constant. The fluid flow enters the first valve arrangement 12 from the pressure line P via the sixth valve arrangement 16.

The sixth valve arrangement 16 may include a pressure compensating flow control valve. The sixth valve arrangement 16 may include a restriction 46, or an orifice, across which the fluid flows, and the fluid pressure difference across the restriction 46 is sensed for the purpose of controlling the fluid flow.

The restriction 46 may be located upstream of the first valve arrangement 12 as shown in Fig. 3, or within a valve or valve element of the first valve arrangement 12, or in the first line 14 between the first actuator and the first valve arrangement 12. The sixth valve arrangement 16 may include pilot lines for sensing the fluid pressure difference.

According to the invention, the hydraulic system further comprises control devices adapted to sense the level or magnitude of the fluid pressure of the first line 14, and to sense the level or magnitude of the fluid pressure of the pressure line P, i.e. the first fluid pressure p1. The control devices may include valve arrangements, valves, electronic control units, control algorithms, control signals, and pressure sensors, operably connected to each other and adapted to bring about the operation as described in the examples.

The control devices are adapted to selectively reduce the third fluid pressure p3 of the pilot line 28, the third fluid pressure p3 being additionally dependent on a first fluid pressure difference. For example, one or more predetermined dependencies define the third fluid pressure p3 as a function of the first fluid pressure difference. The one or more predetermined dependencies may be realized in an electronic control unit, e.g. an electronic control unit 40, for controlling elements and devices of the hydraulic system.

The first fluid pressure difference is the pressure difference between the fluid pressure of the first line 14 and the first fluid pressure p1 of the pressure line P. The operation to reduce the third fluid pressure p3, as described above when reducing the pressing force, is brought about in such a way that the third fluid pressure p3 decreases when the first fluid pressure difference decreases as a consequence of the fluid pressure of the first line 14 increasing. The operation takes place at least when the first and second valve arrangements 14, 20 are in their first states.

During the operation, the first and second actuators 10, 18 are driven to crosscut the tree stem as described above.

An advantage of the presented solution is that the pressing force of the second actuator 18 is decreased to avoid the increased load on the saw chain 118 and the unwanted decrease in the velocity of the saw chain 118. An increase in the fluid pressure of the first line 14 is an indication of the decreasing velocity.

Thus, the load on the saw chain 118 decreases and an increase in the fluid pressure of the first line 14 is avoided. Thus, when cross-cutting the tree stem, excessive racing, i.e. sudden unintended acceleration, of the first actuator 10 and the saw chain 118 can be avoided when completing the cross-cutting.

In the following, examples of the control devices are presented.

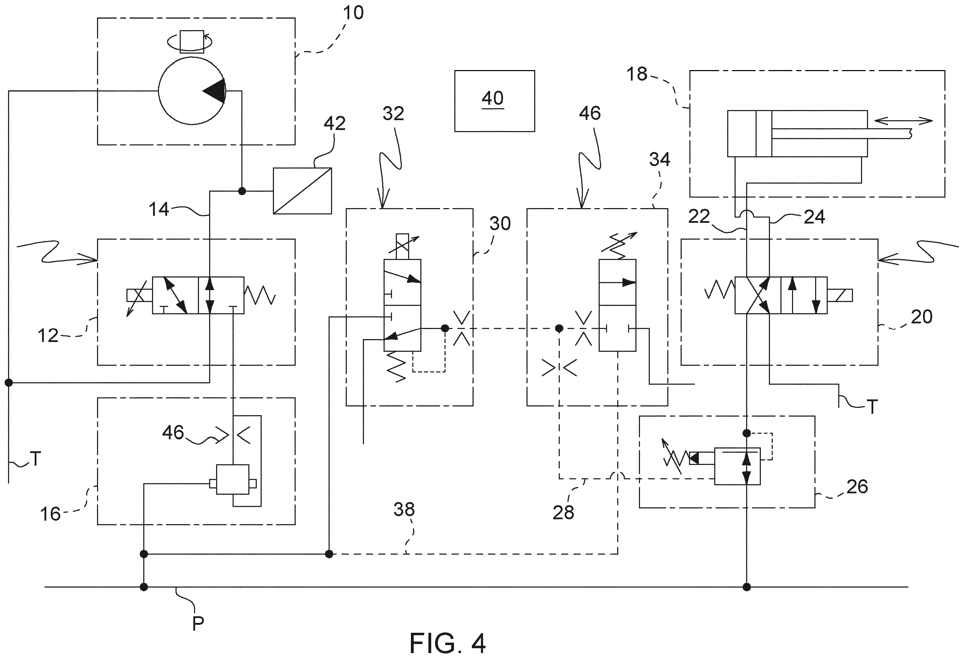

As shown in Figs. 3 and 4, according to a first example of the solution, the control devices include a fifth valve arrangement 34 adapted to be in fluid communication with the pilot line 28. The fifth valve arrangement 34 may be adapted to controllably drain fluid from the pilot line 28 to decrease the third fluid pressure p3 to a level below the predetermined maximum pressure level.

To accomplish this, the fifth valve arrangement 34 is adapted to sense the fluid pressure of the first line 14 and the fluid pressure of the pressure line P, e.g. by means of pressure sensing lines, i.e. pilot lines. The fifth valve arrangement 34 may provide proportional control and is adapted to selectively reduce the third fluid pressure p3 in such a way that the third fluid pressure p3 is dependent on the first fluid pressure difference mentioned above.

According to an example, the fifth valve arrangement 34 is further adapted to selectively increase the third fluid pressure p3 in such a way that the third fluid pressure p3 is additionally dependent on the first fluid pressure difference. Thereby, the third fluid pressure p3 increases when the first fluid pressure difference increases as a consequence of the fluid pressure of the first line 14 decreasing while the first and second valve arrangements 12, 20 are in their first states, the third fluid pressure p3 not exceeding the predetermined maximum pressure level.

As shown in Fig. 4, according to a first option of the first example, the fifth valve arrangement 34 may be pilot operated and includes either a first pilot line 36 (see Fig. 3) that is in fluid communication with the first line 14 for sensing the fluid pressure of the first line 14, or a second pilot line 38 that is in fluid communication with the pressure line P for sensing the fluid pressure of the pressure line P.

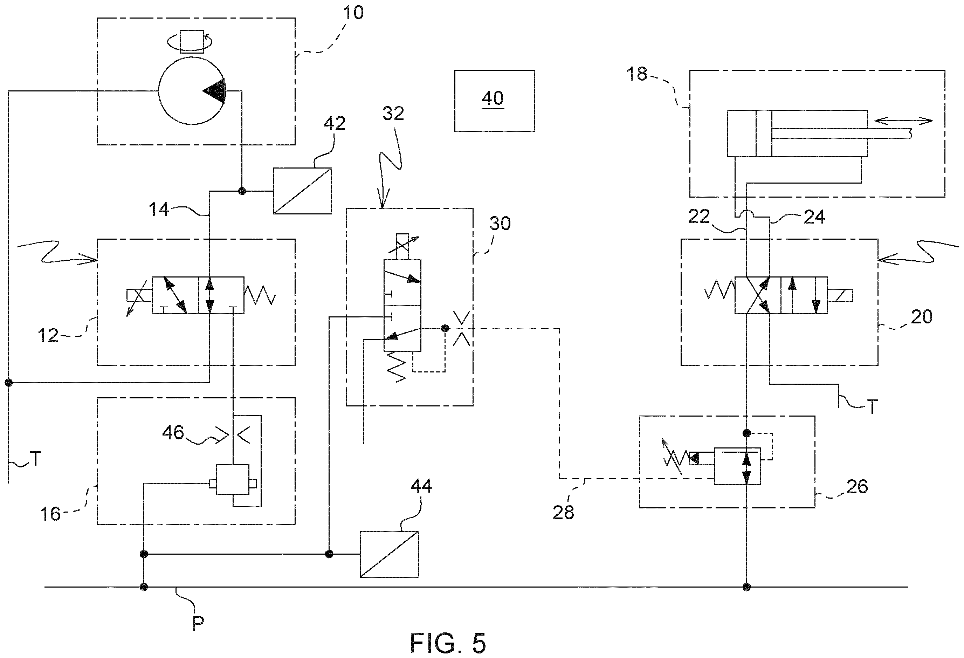

Additionally, the fifth valve arrangement 34 may include an electrically operated proportional control directional valve. The fifth valve arrangement 34 may comprise a first pressure sensor 42 for sensing the fluid pressure of the first line 14, or a second pressure sensor 444 (see Fig. 5) for sensing the fluid pressure of the pressure line P.

In this option, the fifth valve arrangement 34 may comprise an electronic control unit, e.g. the electronic control unit 40, operably connected to the first pressure sensor 42 or the second pressure sensor 44, the electronic control unit being adapted to control the fifth valve arrangement 34 by a second input control signal 46 that is dependent on the determined fluid pressure of the pressure line P or on the determined fluid pressure of the first line 14. The second input control signal 46 is generated by a control algorithm running in the electronic control unit and based on one or more predetermined dependencies.

The fifth valve arrangement 34 thus comprises one pilot line and one pressure sensor and is electronically controlled by the second input control signal 46 representing a pressure level. The fifth valve arrangement 34 may be internally adapted to balance forces generated by both the fluid pressure in the pilot line and the second input control signal 46 driving e.g. a solenoid. The difference between the forces represents the first fluid pressure difference.

As shown in Fig. 3, according to a second option of the first example, the fifth valve arrangement 34 may be pilot operated and includes both the first pilot line 36 for sensing the fluid pressure of the first line 14, and the second pilot line 38 for sensing the fluid pressure of the pressure line P.

The fifth valve arrangement 34 thus comprises two pilot lines and the difference between the fluid pressures in the two pilot lines define the first fluid pressure difference. The fifth valve arrangement 34 may be internally adapted to balance forces generated by the fluid pressures in the pilot lines. The difference between the forces represents the first fluid pressure difference. The fifth valve arrangement 34 may include a pilot operated directional valve.

Based on the second option shown in Fig 4, according to a third option of the first example, the fifth valve arrangement 34 may be electrically operated and/or provide proportional control, and it may include an electrically operated proportional control directional valve.

In this option, see Fig. 4, the fifth valve arrangement 34 comprises a first pressure sensor 42 for sensing the fluid pressure of the first line 14, and a second pressure sensor 44 (see Fig. 5) for sensing the fluid pressure of the pressure line P at the first fluid pressure *p1.*

The fifth valve arrangement 34 may further comprise an electronic control unit, e.g. the electronic control unit 40, operably connected to the first and second sensors 42, 44, the electronic control unit being adapted to control the fifth valve arrangement 34 by the second input control signal 46. The second input control signal 46 is dependent on the first fluid pressure difference determined, the second input control signal 46 being generated by a control algorithm running in the electronic control unit and based on one or more predetermined dependencies.

As shown in Fig. 5, according to a second example of the solution, the control devices comprise a first pressure sensor 42 for sensing the fluid pressure of the first line 14, and a second pressure sensor 44 for sensing the fluid pressure of the pressure line P. The first and second pressure sensors 42, 44 may be included in the fourth valve arrangement 30.

In the second example, the control devices, or the fourth valve arrangement 30, may further comprise an electronic control unit, e.g. the electronic control unit 40, operably connected to the first and second sensors 42, 44, the electronic control unit being, as described above, adapted to control the fourth valve arrangement 30 by the first input signal 32. The first input signal 32 being thus additionally dependent on the determined first fluid pressure difference, the first input signal is generated by a control algorithm running in the electronic control unit and based on one or more predetermined dependencies. Control actions based on the first fluid pressure difference override control actions of an operator when adjusting the third fluid pressure p3.

Additionally, the first input control signal 32 is dependent on control actions of an operator for setting the predetermined maximum level for the third fluid pressure p3 of the pilot line 28. The operator sets the third fluid pressure p3 by interacting with the electronic control unit by means of a user interface. Thus, the operator sets the pressing force of the saw blade 116 by means of the first input control signal 32.

The electronic control unit may be a programmable microprocessor-based device with a memory device and associated computer program code, for generating input control signals to responsively control the devices and valve arrangements. The control unit may have a distributed configuration with several subunits.

Other components necessary for the basic functioning of the presented hydraulic circuit and for controlling flows of fluid in the presented system may be added to the solution presented in the Figures.

Furthermore, each valve arrangement and control device realize the operations and functions that are described above. Elements needed to realize the valve arrangement, or the control device, are widely known and may include one or more valves of various types, based on various operating principles, e.g. valves applying proportional or servo control, spool valves, or cartridge valves. The graphical symbols shown in the Figures to represent e.g. the valve arrangements do not limit the types of valves used but merely show an example how to realize the operation and functions of the hydraulic circuit.

The verbs "to comprise" and "to include" are used in this document as open limitations that neither exclude nor require the existence of features that are not cited. Furthermore, it is to be understood that the use of "a" or "an", i.e. a singular form, throughout this document does not exclude a plurality, unless where specifically mentioned.

In the description, numerous specific details are set forth in order to provide a thorough understanding of the present solution. It is to be understood that the examples of the solution disclosed are not limited to the structures disclosed herein, but are extended to equivalents thereof as would be recognized by those skilled in the relevant art.

The solution is not limited solely to the above-presented embodiments, but it can be modified within the scope of the appended claims.

## Claims

1. A hydraulic system for controlling a sawing apparatus adapted to cross-cut tree stems, the hydraulic system comprising:
- a pressure line (P) adapted to supply fluid under pressure, namely at a first fluid pressure *p1*;
- a tank line (T) adapted to receive fluid flowing from actuators;
- a first actuator (10) being a hydraulic motor to bring about torque for driving the sawing apparatus to move at a velocity and to crosscut a tree stem;
- a first electrically operated valve arrangement (12) adapted to control a fluid flow supplied from the pressure line (P) to the first actuator (10) via a first line (14), wherein the first valve arrangement (12) includes:
- a selectable first state to enable a flow of fluid under pressure from the pressure line (P) to the first line (14) to drive the first actuator (10);
- a second actuator (18) being a hydraulic cylinder for driving the sawing apparatus to bring about a force pressing the sawing apparatus against the tree stem,
- a second electrically operated valve arrangement (20) adapted to control a fluid flow supplied from the pressure line (P) to the second actuator (18) through a second line (22), wherein the second valve arrangement (20) includes:
- a selectable first state to enable a flow of fluid under pressure from the pressure line (P) to the second line (22) to drive the second actuator (18);
- a third valve arrangement (26) adapted to maintain a predetermined second fluid pressure *p2* in the fluid flow entering the second valve arrangement (20), the second fluid pressure *p2* being reduced in relation to the first fluid pressure *p1,*
- wherein the fluid flow is adapted to enter the second valve arrangement (20) from the pressure line (P) through the third valve arrangement (26);
- control devices which are adapted to sense the fluid pressure of the first line (14);
**characterized by**:
- the sawing apparatus includes a swingable saw blade around which a saw chain is adapted to travel, wherein the first actuator (10) is adapted to drive the saw chain and the second actuator (18) is adapted to drive the saw blade to press the saw chain against the tree stem;
- the third valve arrangement (26) is pilot operated and the second fluid pressure *p2* is further dependent on a third fluid pressure *p3* of a pilot line (28) that is in fluid communication with the third valve arrangement (26);
- a fourth electrically operated valve arrangement (30) controlled by a first electric input control signal (32) and adapted to be in fluid communication with the pilot line (28),
- wherein the fourth valve arrangement (30) is adapted to maintain the third fluid pressure *p3* of the pilot line (28) at a predetermined maximum pressure level dependent on the magnitude of the first input control signal (32); and
the hydraulic system further comprises:
- control devices which are adapted to sense the fluid pressure of the pressure line (P), namely the first fluid pressure *p1,*
- wherein the control devices are adapted to selectively reduce the third fluid pressure *p3* of the pilot line (28), the third fluid pressure *p3* being additionally dependent on a first fluid pressure difference between the fluid pressure of the first line (14) and the first fluid pressure *p1* of the pressure line (P) in such a way that the third fluid pressure p3decreases when the first fluid pressure difference decreases as a consequence of the fluid pressure of the first line (14) increasing while the first and second valve arrangements (12, 20) are in their first states.

2. The hydraulic system according to claim 1, wherein the control devices include:
- a fifth control valve arrangement (34) adapted to be in fluid communication with the pilot line (28), to sense the fluid pressure of the first line (14), and to sense the fluid pressure of the pressure line (P),
- wherein the fifth valve arrangement (34) is adapted to selectively reduce the third fluid pressure *p3* of the pilot line (28) in such a way that the third fluid pressure *p3* is dependent on the first fluid pressure difference.

3. The hydraulic system according to claim 2, wherein the fifth valve arrangement (34) is further adapted to selectively increase the third fluid pressure *p3* of the pilot line (28) in such a way that the third fluid pressure *p3* is additionally dependent on the first fluid pressure difference, the third fluid pressure *p3* not exceeding the predetermined maximum pressure level.

4. The hydraulic system according to claim 2 or 3, wherein the fifth valve arrangement (34) is pilot operated and comprises:
- (i) a first pilot line (36) in fluid communication with the first line (14) for sensing the fluid pressure of the first line (14), or
- (ii) a second pilot line (38) in fluid communication with the pressure line (P) for sensing the fluid pressure of the pressure line (P), namely the first fluid pressure *p1.*

5. The hydraulic system according to any one of claims 2 to 4, wherein the fifth valve arrangement (34) further comprises:
- (i) a first pressure sensor (42) for sensing the fluid pressure of the first line (14), or
- (ii) a second pressure sensor (44) for sensing the fluid pressure of the pressure line (P), and
- an electronic control unit (40) operably connected to the first and second sensors (42, 44) and being adapted to control the fifth valve arrangement (34) by a second input control signal (46) which is dependent on (i) the fluid pressure of the pressure line P determined or on (ii) the fluid pressure of the first line (14) determined, the second input control signal (46) being generated by a control algorithm running in the electronic control unit (40).

6. The hydraulic system according to claim 2 or 3, wherein the fifth valve arrangement (34) is pilot operated and comprises:
- a first pilot line (36) in fluid communication with the first line (14) for sensing the fluid pressure of the first line (14), and
- a second pilot line (38) in fluid communication with the pressure line (P) for sensing the fluid pressure of the pressure line (P).

7. The hydraulic system according to any one of claims 2, 3 or 6, wherein the fifth valve arrangement (34) comprises:
- a first pressure sensor (42) for sensing the fluid pressure of the first line (14), and
- a second pressure sensor (44) for sensing the fluid pressure of the pressure line (P),
- an electronic control unit (40) operably connected to the first and second pressure sensors (42, 44) and being adapted to control the fifth valve arrangement (34) by a second input control signal (46) which is dependent on the determined first fluid pressure difference, the second input control signal (46) being generated by a control algorithm running in the electronic control unit (40).

8. The hydraulic system according to any one of claims 2 to 7, wherein the fifth valve arrangement (34) includes an electrically operated directional valve or a pilot operated directional valve.

9. The hydraulic system according to claim 1, wherein the control devices include:
- a first pressure sensor (42) for sensing the fluid pressure of the first line (14),
- a second pressure sensor (44) for sensing the fluid pressure of the pressure line (P), and
- an electronic control unit (40) operably connected to the first and second sensors (42, 44) and being adapted to control the fourth valve arrangement (30) by the first input control signal (32) which is additionally dependent on the determined first fluid pressure difference, the first input control signal (32) being generated by a control algorithm running in the electronic control unit (40).

10. The hydraulic system according to any one of claims 1 to 9, wherein the fourth valve arrangement (30) includes an electrically operated proportional control directional valve adapted to be controlled by the first input control signal (32).

11. The hydraulic system according to any one of claims 1 to 10, wherein the hydraulic system further comprises:
- a sixth valve arrangement (16) adapted to maintain a predetermined substantially constant fluid flow in the first state of the first valve arrangement (12) in such a way that the fluid flow is independent of the fluid pressure of the first line (14) whereby fluid pressure changes occurring in the first line (14) are compensated for,
- wherein the fluid flow is adapted to enter the first valve arrangement (12) from the pressure line (P) via the sixth valve arrangement (16).

12. The hydraulic system according to any one of claims 1 to 11, wherein the hydraulic system further comprises an electronic control unit (40) operably connected to the fourth valve arrangement (30), for transmitting the first input control signal (32) generated by a control algorithm running in the electronic control unit (40) under control of an operator.

13. A sawing apparatus (114) for cross-cutting tree stems, comprising a swingable saw blade (116) around which a saw chain (118) is adapted to travel and the hydraulic system according to any one of claims 1 to 12.

14. A tree stem processing tool (108) including a sawing apparatus (114) for cross-cutting tree stems, the sawing apparatus (114) comprising a swingable saw blade (116) around which a saw chain (118) is adapted to travel, and the hydraulic system according to any one of claims 1 to 12.

15. A mobile work machine (100) including a frame (102), an articulated boom (104) on the frame, and a tree stem processing tool (108) connected to the articulated boom, the tree stem processing tool (108) including a sawing apparatus (114) for cross-cutting tree stems, the sawing apparatus (114) comprising a swingable saw blade (116) around which a saw chain (118) is adapted to travel, and the hydraulic system according to any one of claims 1 to 12.

## Patentansprüche

1. Hydrauliksystem zum Steuern einer Sägevorrichtung, die so angepasst ist, dass sie Baumstämme querschneidet, wobei das Hydrauliksystem Folgendes umfasst:
- eine Druckleitung (P), die so angepasst ist, dass sie Fluid unter Druck, nämlich bei einem ersten Fluiddruck *p1,* zuführt;
- eine Tankleitung (T), die so angepasst ist, dass sie aus Antrieben strömendes Fluid aufnimmt;
- einen ersten Antrieb (10), bei dem es sich um einen Hydraulikmotor zum Erzeugen eines Drehmoments zum Antreiben der Sägevorrichtung zur Bewegung mit einer Geschwindigkeit und zum Querschneiden eines Baumstamms handelt;
- eine erste elektrisch betätigte Ventilanordnung (12), die so angepasst ist, dass sie einen aus der Druckleitung (P) über eine erste Leitung (14) dem ersten Antrieb (10) zugeführten Fluidstrom steuert, wobei die erste Ventilanordnung (12) Folgendes enthält:
- einen wählbaren ersten Zustand zum Ermöglichen des Strömens von Fluid unter Druck aus der Druckleitung (P) in die erste Leitung (14), um den ersten Antrieb (10) anzutreiben;
- einen zweiten Antrieb (18), bei dem es sich um einen Hydraulikzylinder zum Antreiben der Sägevorrichtung zum Erzeugen einer Kraft, mit der die Sägevorrichtung gegen den Baumstamm gedrückt wird, handelt,
- eine zweite elektrisch betätigte Ventilanordnung (20), die so angepasst ist, dass sie einen aus der Druckleitung (P) durch eine zweite Leitung (22) dem zweiten Antrieb (18) zugeführten Fluidstrom steuert, wobei die zweite Ventilanordnung (20) Folgendes enthält:
- einen wählbaren ersten Zustand zum Ermöglichen des Strömens von Fluid unter Druck aus der Druckleitung (P) in die zweite Leitung (22), um den zweiten Antrieb (18) anzutreiben;
- eine dritte Ventilanordnung (26), die so angepasst ist, dass sie einen vorher bestimmten zweiten Fluiddruck p2 in dem in die zweite Ventilanordnung (20) eintretenden Fluidstrom hält, wobei der zweite Fluiddruck p2 im Verhältnis zum ersten Fluiddruck *p1* verringert wird,
- wobei der Fluidstrom so angepasst ist, dass er aus der Druckleitung (P) durch die dritte Ventilanordnung (26) in die zweite Ventilanordnung (20) eintritt;
- Steuereinrichtungen, die so angepasst sind, dass sie den Fluiddruck der ersten Leitung (14) erfassen;
**dadurch gekennzeichnet, dass**
- die Sägevorrichtung ein schwenkbares Sägeblatt, um das sich eine hierzu angepasste Sägekette herumbewegt, enthält, wobei der erste Antrieb (10) so angepasst ist, dass er die Sägekette antreibt, und der zweite Antrieb (18) so angepasst ist, dass er das Sägeblatt antreibt, um die Sägekette gegen den Baumstamm zu drücken;
- die dritte Ventilanordnung (26) vorgesteuert wird und der zweite Fluiddruck p2 ferner von einem dritten Fluiddruck p3 einer Vorsteuerleitung (28), die in fluidischer Verbindung mit der dritten Ventilanordnung (26) ist, abhängig ist;
- eine vierte elektrisch betätigte Ventilanordnung (30) durch ein erstes elektrisches Eingabesteuersignal (32) gesteuert wird und so angepasst ist, dass sie in fluidischer Verbindung mit der Vorsteuerleitung (28) ist,
- wobei die vierte Ventilanordnung (30) so angepasst ist, dass sie den dritten Fluiddruck p3 der Vorsteuerleitung (28) auf einem vorher bestimmten maximalen Druckpegel, der von der Stärke des ersten Eingabesteuersignals (32) abhängig ist, hält; und
das Hydrauliksystem ferner Folgendes umfasst:
- Steuereinrichtungen, die so angepasst sind, dass sie den Fluiddruck der Druckleitung (P), nämlich den ersten Fluiddruck *p1,* erfassen,
- wobei die Steuereinrichtungen so angepasst sind, dass sie den dritten Fluiddruck p3 der Vorsteuerleitung (28) selektiv verringern, wobei der dritte Fluiddruck p3 zusätzlich von einer ersten Fluiddruckdifferenz zwischen dem Fluiddruck der ersten Leitung (14) und dem ersten Fluiddruck *p1* der Druckleitung (P) abhängig ist, sodass der dritte Fluiddruck *p3* abnimmt, wenn die erste Fluiddruckdifferenz infolge einer Erhöhung des Fluiddrucks der ersten Leitung (14) kleiner wird, während die erste und die zweite Ventilanordnung (12, 20) je in ihrem ersten Zustand sind.

2. Hydrauliksystem nach Anspruch 1, wobei die Steuereinrichtungen Folgendes enthalten:
- eine fünfte Steuerventilanordnung (34), die so angepasst ist, dass sie in fluidischer Verbindung mit der Vorsteuerleitung (28) ist, um den Fluiddruck der ersten Leitung (14) zu erfassen und den Fluiddruck der Druckleitung (P) zu erfassen,
- wobei die fünfte Ventilanordnung (34) so angepasst ist, dass sie den dritten Fluiddruck *p3* der Vorsteuerleitung (28) selektiv verringert, sodass der dritte Fluiddruck p3 von der ersten Fluiddruckdifferenz abhängig ist.

3. Hydrauliksystem nach Anspruch 2, wobei die fünfte Ventilanordnung (34) ferner so angepasst ist, dass sie den dritten Fluiddruck p3 der Vorsteuerleitung (28) selektiv erhöht, sodass der dritte Fluiddruck p3 zusätzlich von der ersten Fluiddruckdifferenz abhängig ist, wobei der dritte Fluiddruck p3 den vorher bestimmten maximalen Druckpegel nicht überschreitet.

4. Hydrauliksystem nach Anspruch 2 oder 3, wobei die fünfte Ventilanordnung (34) vorgesteuert wird und Folgendes umfasst:
- (i) eine erste Vorsteuerleitung (36) in fluidischer Verbindung mit der ersten Leitung (14) zum Erfassen des Fluiddrucks der ersten Leitung (14) oder
- (ii) eine zweite Vorsteuerleitung (38) in fluidischer Verbindung mit der Druckleitung (P) zum Erfassen des Fluiddrucks der Druckleitung (P), nämlich des ersten Fluiddrucks *p1.*

5. Hydrauliksystem nach einem der Ansprüche 2 bis 4, wobei die fünfte Ventilanordnung (34) ferner Folgendes umfasst:
- (i) einen ersten Drucksensor (42) zum Erfassen des Fluiddrucks der ersten Leitung (14) oder
- (ii) einen zweiten Drucksensor (44) zum Erfassen des Fluiddrucks der Druckleitung (P) und
- eine elektronische Steuereinheit (40), die mit dem ersten und dem zweiten Sensor (42, 44) betriebsfähig verbunden und so angepasst ist, dass sie die fünfte Ventilanordnung (34) durch ein zweites Eingabesteuersignal (46), das von (i) dem bestimmten Fluiddruck der Druckleitung P oder von (ii) dem bestimmten Fluiddruck der ersten Leitung (14) abhängig ist, steuert, wobei das zweite Eingabesteuersignal (46) durch einen Steueralgorithmus, der in der elektronischen Steuereinheit (40) läuft, generiert wird.

6. Hydrauliksystem nach Anspruch 2 oder 3, wobei die fünfte Ventilanordnung (34) vorgesteuert wird und Folgendes umfasst:
- eine erste Vorsteuerleitung (36) in fluidischer Verbindung mit der ersten Leitung (14) zum Erfassen des Fluiddrucks der ersten Leitung (14) und
- eine zweite Vorsteuerleitung (38) in fluidischer Verbindung mit der Druckleitung (P) zum Erfassen des Fluiddrucks der Druckleitung (P).

7. Hydrauliksystem nach Anspruch 2, 3 oder 6, wobei die fünfte Ventilanordnung (34) Folgendes umfasst:
- einen ersten Drucksensor (42) zum Erfassen des Fluiddrucks der ersten Leitung (14) und
- einen zweiten Drucksensor (44) zum Erfassen des Fluiddrucks der Druckleitung (P),
- eine elektronische Steuereinheit (40), die mit dem ersten und dem zweiten Drucksensor (42, 44) betriebsfähig verbunden und so angepasst ist, dass sie die fünfte Ventilanordnung (34) durch ein zweites Eingabesteuersignal (46), das von der bestimmten ersten Fluiddruckdifferenz abhängig ist, steuert, wobei das zweite Eingabesteuersignal (46) durch einen Steueralgorithmus, der in der elektronischen Steuereinheit (40) läuft, generiert wird.

8. Hydrauliksystem nach einem der Ansprüche 2 bis 7, wobei die fünfte Ventilanordnung (34) ein elektrisch betätigtes Wegeventil oder ein vorgesteuertes Wegeventil enthält.

9. Hydrauliksystem nach Anspruch 1, wobei die Steuereinrichtungen Folgendes enthalten:
- einen ersten Drucksensor (42) zum Erfassen des Fluiddrucks der ersten Leitung (14),
- einen zweiten Drucksensor (44) zum Erfassen des Fluiddrucks der Druckleitung (P) und
- eine elektronische Steuereinheit (40), die mit dem ersten und dem zweiten Sensor (42, 44) betriebsfähig verbunden und so angepasst ist, dass sie die vierte Ventilanordnung (30) durch das erste Eingabesteuersignal (32), das zusätzlich von der bestimmten ersten Fluiddruckdifferenz abhängig ist, steuert, wobei das erste Eingabesteuersignal (32) durch einen Steueralgorithmus, der in der elektronischen Steuereinheit (40) läuft, generiert wird.

10. Hydrauliksystem nach einem der Ansprüche 1 bis 9, wobei die vierte Ventilanordnung (30) ein elektrisch betätigtes Proportionalwegeventil enthält, das so angepasst ist, dass es durch das erste Eingabesteuersignal (32) gesteuert wird.

11. Hydrauliksystem nach einem der Ansprüche 1 bis 10, wobei das Hydrauliksystem ferner Folgendes umfasst:
- eine sechste Ventilanordnung (16), die so angepasst ist, dass sie einen vorher bestimmten, im Wesentlichen konstanten Fluidstrom im ersten Zustand der ersten Ventilanordnung (12) hält, sodass der Fluidstrom vom Fluiddruck der ersten Leitung (14) unabhängig ist, wodurch in der ersten Leitung (14) auftretende Fluiddruckänderungen kompensiert werden,
- wobei der Fluidstrom so angepasst ist, dass er aus der Druckleitung (P) über die sechste Ventilanordnung (16) in die erste Ventilanordnung (12) eintritt.

12. Hydrauliksystem nach einem der Ansprüche 1 bis 11, wobei das Hydrauliksystem ferner eine elektronische Steuereinheit (40), die mit der vierten Ventilanordnung (30) betriebsfähig verbunden ist, zum Übertragen des ersten Eingabesteuersignals (32) umfasst, das durch einen Steueralgorithmus, der in der von einer Bedienungsperson gesteuerten elektronischen Steuereinheit (40) läuft, generiert wird.

13. Sägevorrichtung (114) zum Querschneiden von Baumstämmen, die ein schwenkbares Sägeblatt (116), um das sich eine hierzu angepasste Sägekette (118) herumbewegt, und das Hydrauliksystem nach einem der Ansprüche 1 bis 12 umfasst.

14. Baumstammbearbeitungswerkzeug (108), das eine Sägevorrichtung (114) zum Querschneiden von Baumstämmen enthält, wobei die Sägevorrichtung (114) ein schwenkbares Sägeblatt (116), um das sich eine hierzu angepasste Sägekette (118) herumbewegt, und das Hydrauliksystem nach einem der Ansprüche 1 bis 12 umfasst.

15. Mobile Arbeitsmaschine (100), die einen Rahmen (102), einen Knickausleger (104) auf dem Rahmen und ein mit dem Knickausleger verbundenes Baumstammbearbeitungswerkzeug (108) enthält, wobei das Baumstammbearbeitungswerkzeug (108) eine Sägevorrichtung (114) zum Querschneiden von Baumstämmen enthält, wobei die Sägevorrichtung (114) ein schwenkbares Sägeblatt (116), um das sich eine hierzu angepasste Sägekette (118) herumbewegt, und das Hydrauliksystem nach einem der Ansprüche 1 bis 12 umfasst.

## Revendications

1. Système hydraulique pour commander un appareil de sciage adapté pour couper des tiges d'arbres, le système hydraulique comprenant :
- une conduite de pression (P) adaptée pour fournir du fluide sous pression, à savoir à une première pression de fluide *p1* ;
- une conduite de réservoir (T) adaptée pour recevoir du fluide s'écoulant depuis des actionneurs ;
- un premier actionneur (10) étant un moteur hydraulique pour générer un couple pour entraîner l'appareil de sciage pour qu'il se déplace à une vitesse et qu'il coupe une tige d'arbre ;
- un premier agencement de vanne (12) actionné électriquement adapté pour commander un écoulement de fluide fourni depuis la conduite de pression (P) au premier actionneur (10) par l'intermédiaire d'une première conduite (14), dans lequel le premier agencement de vanne (12) inclut :
- un premier état sélectionnable pour permettre un écoulement de fluide sous pression depuis la conduite de pression (P) vers la première conduite (14) pour entraîner le premier actionneur (10) ;
- un second actionneur (18) étant un vérin hydraulique pour entraîner l'appareil de sciage pour amener une force pressant l'appareil de sciage contre la tige d'arbre,
- un second agencement de vanne (20) actionné électriquement adapté pour commander un écoulement de fluide fourni depuis la conduite de pression (P) au second actionneur (18) à travers une seconde conduite (22), dans lequel le second agencement de vanne (20) inclut :
- un premier état sélectionnable pour permettre un écoulement de fluide sous pression depuis la conduite de pression (P) vers la seconde conduite (22) pour entraîner le second actionneur (18) ;
- un troisième agencement de vanne (26) adapté pour maintenir une seconde pression de fluide p2 prédéterminée dans l'écoulement de fluide entrant dans le second agencement de vanne (20), la seconde pression de fluide p2 étant réduite par rapport à la première pression de fluide *p1,*
- dans lequel l'écoulement de fluide est adapté pour entrer dans le second agencement de vanne (20) depuis la conduite de pression (P) à travers le troisième agencement de vanne (26) ;
- des dispositifs de commande qui sont adaptés pour détecter la pression de fluide de la première conduite (14) ;
**caractérisé en ce que** :
- l'appareil de sciage inclut une lame de scie oscillante autour de laquelle une chaîne de scie est adaptée pour se déplacer, dans lequel le premier actionneur (10) est adapté pour entraîner la chaîne de scie et le second actionneur (18) est adapté pour entraîner la lame de scie pour presser la chaîne de scie contre la tige d'arbre ;
- le troisième agencement de vanne (26) est actionné par pilote et la seconde pression de fluide p2 est en outre dépendante d'une troisième pression de fluide p3 d'une conduite pilote (28) qui est en communication fluidique avec le troisième agencement de vanne (26) ;
- un quatrième agencement de vanne (30) actionné électriquement est commandé par un premier signal de commande d'entrée électrique (32) et adapté pour être en communication fluidique avec la conduite pilote (28),
- dans lequel le quatrième agencement de vanne (30) est adapté pour maintenir la troisième pression de fluide p3 de la conduite pilote (28) à un niveau de pression maximal prédéterminé dépendant de l'amplitude du premier signal de commande d'entrée (32) ; et
le système hydraulique comprend en outre :
- des dispositifs de commande qui sont adaptés pour détecter la pression de fluide de la conduite de pression (P), à savoir la première pression de fluide *p1,*
- dans lequel les dispositifs de commande sont adaptés pour réduire sélectivement la troisième pression de fluide p3 de la conduite pilote (28), la troisième pression de fluide p3 étant en outre dépendante d'une première différence de pression de fluide entre la pression de fluide de la première conduite (14) et la première pression de fluide *p1* de la conduite de pression (P) de telle manière que la troisième pression de fluide p3 diminue lorsque la première différence de pression de fluide diminue en conséquence de l'augmentation de la pression de fluide de la première conduite (14) pendant que les premier et second agencements de vanne (12, 20) sont dans leurs premiers états.

2. Système hydraulique selon la revendication 1, dans lequel les dispositifs de commande incluent :
- un cinquième agencement de vanne de commande (34) adapté pour être en communication fluidique avec la conduite pilote (28), pour détecter la pression de fluide de la première conduite (14), et pour détecter la pression de fluide de la conduite de pression (P),
- dans lequel le cinquième agencement de vanne (34) est adapté pour réduire sélectivement la troisième pression de fluide p3 de la conduite pilote (28) de telle manière que la troisième pression de fluide p3 est dépendante de la première différence de pression de fluide.

3. Système hydraulique selon la revendication 2, dans lequel le cinquième agencement de vanne (34) est en outre adapté pour augmenter sélectivement la troisième pression de fluide p3 de la conduite pilote (28) de telle manière que la troisième pression de fluide p3 est en outre dépendante de la première différence de pression de fluide, la troisième pression de fluide p3 ne dépassant par le niveau de pression maximal prédéterminé.

4. Système hydraulique selon la revendication 2 ou 3, dans lequel le cinquième agencement de vanne (34) est actionné par pilote et comprend :
- (i) une première conduite pilote (36) en communication fluidique avec la première conduite (14) pour détecter la pression de fluide de la première conduite (14), ou
- (ii) une seconde conduite pilote (38) en communication fluidique avec la conduite de pression (P) pour détecter la pression de fluide de la conduite de pression (P), à savoir la première pression de fluide *pl.*

5. Système hydraulique selon l'une quelconque des revendications 2 à 4, dans lequel le cinquième agencement de vanne (34) comprend en outre :
- (i) un premier capteur de pression (42) pour détecter la pression de fluide de la première conduite (14), ou
- (ii) un second capteur de pression (44) pour détecter la pression de fluide de la conduite de pression (P), et
- une unité de commande électronique (40) reliée de manière opérationnelle aux premier et second capteurs (42, 44) et étant adaptée pour commander le cinquième agencement de vanne (34) par un second signal de commande d'entrée (46) qui est dépendant de (i) la pression de fluide de la conduite de pression P déterminée ou de (ii) la pression de fluide de la première conduite (14) déterminée, le second signal de commande d'entrée (46) étant généré par un algorithme de commande exécuté dans l'unité de commande électronique (40).

6. Système hydraulique selon la revendication 2 ou 3, dans lequel le cinquième agencement de vanne (34) est actionné par pilote et comprend :
- une première conduite pilote (36) en communication fluidique avec la première conduite (14) pour détecter la pression de fluide de la première conduite (14), et
- une seconde conduite pilote (38) en communication fluidique avec la conduite de pression (P) pour détecter la pression de fluide de la conduite de pression (P).

7. Système hydraulique selon l'une quelconque des revendications 2, 3 et 6, dans lequel le cinquième agencement de vanne (34) comprend :
- un premier capteur de pression (42) pour détecter la pression de fluide de la première conduite (14), et
- un second capteur de pression (44) pour détecter la pression de fluide de la conduite de pression (P),
- une unité de commande électronique (40) reliée de manière opérationnelle aux premier et second capteurs de pression (42, 44) et étant adaptée pour commander le cinquième agencement de vanne (34) par un second signal de commande d'entrée (46) qui est dépendant de la première différence de pression de fluide déterminée, le second signal de commande d'entrée (46) étant généré par un algorithme de commande exécuté dans l'unité de commande électronique (40).

8. Système hydraulique selon l'une quelconque des revendications 2 à 7, dans lequel le cinquième agencement de vanne (34) inclut une vanne directionnelle actionnée électriquement ou une vanne directionnelle actionnée par pilote.

9. Système hydraulique selon la revendication 1, dans lequel les dispositifs de commande incluent :
- un premier capteur de pression (42) pour détecter la pression de fluide de la première conduite (14),
- un second capteur de pression (44) pour détecter la pression de fluide de la conduite de pression (P), et
- une unité de commande électronique (40) reliée de manière opérationnelle aux premier et second capteurs (42, 44) et étant adaptée pour commander le quatrième agencement de vanne (30) par le premier signal de commande d'entrée (32) qui est en outre dépendant de la première différence de pression de fluide déterminée, le premier signal de commande d'entrée (32) étant généré par un algorithme de commande exécuté dans l'unité de commande électronique (40).

10. Système hydraulique selon l'une quelconque des revendications 1 à 9, dans lequel le quatrième agencement de vanne (30) inclut une vanne directionnelle de commande proportionnelle actionnée électriquement adaptée pour être commandée par le premier signal de commande d'entrée (32).

11. Système hydraulique selon l'une quelconque des revendications 1 à 10, dans lequel le système hydraulique comprend en outre :
- un sixième agencement de vanne (16) adapté pour maintenir un écoulement de fluide sensiblement constant prédéterminé dans le premier état du premier agencement de vanne (12) de telle manière que l'écoulement de fluide est indépendant de la pression de fluide de la première conduite (14) moyennant quoi des changements de pression de fluide se produisant dans la première conduite (14) sont compensés,
- dans lequel l'écoulement de fluide est adapté pour entrer dans le premier agencement de vanne (12) depuis la conduite de pression (P) par l'intermédiaire du sixième agencement de vanne (16).

12. Système hydraulique selon l'une quelconque des revendications 1 à 11, dans lequel le système hydraulique comprend en outre une unité de commande électronique (40) reliée de manière opérationnelle au quatrième agencement de vanne (30), pour transmettre le premier signal de commande d'entrée (32) généré par un algorithme de commande exécuté dans l'unité de commande électronique (40) sous la commande d'un opérateur.

13. Appareil de sciage (114) pour couper des tiges d'arbres, comprenant une lame de scie oscillante (116) autour de laquelle une chaîne de scie (118) est adaptée pour se déplacer et le système hydraulique selon l'une quelconque des revendications 1 à 12.

14. Outil de traitement de tiges d'arbres (108) incluant un appareil de sciage (114) pour couper des tiges d'arbres, l'appareil de sciage (114) comprenant une lame de scie oscillante (116) autour de laquelle une chaîne de scie (118) est adaptée pour se déplacer, et le système hydraulique selon l'une quelconque des revendications 1 à 12.

15. Machine de travail mobile (100) incluant un châssis (102), une flèche articulée (104) sur le châssis, et un outil de traitement de tiges d'arbres (108) relié à la flèche articulée, l'outil de traitement de tiges d'arbres (108) incluant un appareil de sciage (114) pour couper des tiges d'arbres, l'appareil de sciage (114) comprenant une lame de scie oscillante (116) autour de laquelle une chaîne de scie (118) est adaptée pour se déplacer, et le système hydraulique selon l'une quelconque des revendications 1 à 12.
